# EUROPEAN PATENT SPECIFICATION

(11) **EP 3 748 173 B1**
(45) Date of publication and mention of the grant of the patent: **14.08.2024**
(21) Application number: 20177189.6
(22) Date of filing: 28.05.2020
(51) Int. Cl.: F16B 33/00, F16B 37/14, B60B 7/06, F16B 21/18, B60B 3/16

(54) **FASTENING DEVICE MADE AS A NUT OR A BOLT PROVIDED WITH A PLUG**
BEFESTIGUNGSMITTEL ALS MUTTER ODER BOLZEN MIT VERSCHLUSSZAPFEN
DISPOSITIF DE FIXATION FAIT COMME UN ECROU OU UN BOULON FOURNI AVEC UNE FICHE

(30) Priority: 04.06.2019 IT 201900008043
(43) Date of publication of application: 09.12.2020
(73) Proprietor: Groppo, Lazzaro, 12040 Sanfre' (CN) (IT); Groppo, Matteo, 12040 Sanfre (CN) (IT)
(72) Inventor: Groppo, Lazzaro, 12040 Sanfre' (CN) (IT); Groppo, Matteo, 12040 Sanfre (CN) (IT)
(74) Representative: Robba, Pierpaolo

(56) References cited:
- WO-A1-2014/129163
- GB-A- 678 839
- JP-A- H08 145 033
- US-A1- 2013 071 204
- US-A1- 2013 108 395
- US-A1- 2017 234 356

## Description

### Technical Field

The invention relates to a fastening device made as a nut or bolt and adapted to be coupled to a corresponding screw or captive screw when it is made as a nut, or adapted to be engaged in a threaded bore when it is made as a bolt. More particularly, though not exclusively, the invention relates to a fastening device made as a nut or bolt, for fastening a wheel to a vehicle hub.

### Prior Art

Fastening devices intended for being screwed onto a screw or captive screw when they are made as nut, or intended for being engaged in a threaded bore when they are made as bolts, for establishing a press connection between mechanical parts are known. When these fastening devices are made as fastening nuts, they usually comprise a cylindrical body having an at least partially threaded bore and arranged to engage with the threaded portion of a screw or captive screw. When these fastening devices are made as bolts, they usually comprise a cylindrical body provided with a longitudinal threaded shaft.

Depending on the application, the longitudinal bore provided in the body of the fastening device made as a nut can be a through bore or a blind bore. A fastening device made as a nut having a through bore can be manufactured industrially at a lower cost and in a shorter time than a nut having a blind hole, which, instead, requires a more complex machining process. Even though the fastening device made as a nut having a through bore is easier to manufacture, there are still some problems, such as, for example, the problem of the outer appearance, which is unpleasant once the nut has been fastened. In addition, a nut having a through bore presents the problem of dirt accumulating inside the longitudinal axial bore. To solve these problems, fastening devices made as nuts with a decorative plug capable of closing one end of the axial through bore are well known. An example of a nut with a decorative plug is described in document US2013071204 (A1).

The known fastening devices made as nuts and having a plug, however, have a number of drawbacks.

A first drawback lies in the difficulty of engagement during the step of assembling the plug onto the nut body. The engaging means with which the plug is equipped can in fact become easily damaged during coupling of the plug with the body of the fastening device made as a nut.

A further drawback is that the plug is frequently not firmly associated with the body of the fastening device made as a nut or bolt, whereby, when the fastening device is used to secure a part susceptible to vibrations, such as a vehicle wheel, there is a risk that the plug will come out of the body of the fastening device.

A first object of the invention is to provide a fastening device with plug that does not have the drawbacks of prior art.

Another object of the invention is to provide a device of the aforementioned type that can be made either as a nut or as a bolt.

Another object of the invention is to provide a fastening device of the aforementioned type that has a pleasant outer appearance.

A further object of the invention is to provide a fastening device made as a nut that prevents dirt from accumulating in the axial bore provided in the body of the nut.

The last but not least object of the invention is to provide a fastening device made as a nut or bolt having a plug that can be manufactured industrially at an advantageous cost.

These and other objects are achieved with the fastening device made as nut or bolt as claimed in the appended claims.

### Summary of the Invention

The fastening device according to the invention comprises the features of claim 1 and can be made as a nut or bolt and comprises a cylindrical body in which there are provided a first end, a second end and a longitudinal axis. An intermediate portion is provided between the first end and the second end of the cylindrical body of the device, said intermediate portion having an outer engaging portion intended for a driving tool or wrench by means of which the fastening device made as a nut or bolt can be rotated about the longitudinal axis. When the fastening device is made as a nut, its cylindrical body is provided with an at least partially threaded axial bore, preferably axial through bore. When the fastening device is made as a bolt, the fastening device comprises a cylindrical body having a threaded longitudinal shaft, extending towards the second end, and an open blind bore at the first end. In addition, near the first end, a seat developing axially about the longitudinal axis and adapted to receive a plug is provided inside the cylindrical body of the fastening device. The fastening device made as a nut or bolt is further provided with a plug shaped to engage in the seat provided inside the cylindrical body. The plug comprises a head and a body extending centrally in an axial direction from the head. The body of the plug is integral to the head of said plug. The head comprises a surface that faces outwards when the plug is mounted on the fastening device made as a nut or bolt, on which surface a logo or other kind of information message can be printed. According to the invention the plug and the cylindrical body of the fastening device made as a nut or bolt comprise engaging means cooperating with each other for holding said plug firmly associated with the cylindrical body of the fastening device. The engaging means comprise a plurality of axial legs extending centrally from the head of the plug, said legs being adapted to cooperate with an annular edge projecting radially inside the axial through bore, when the fastening device is made as a nut, or inside the blind bore, when the fastening device is made as a nut, said annular edge being adjacent to the seat provided in the cylindrical body of the fastening device. Preferably, the annular edge is shaped, for example by means of a chamfered guide surface for promoting engagement of the legs with the annular edge of the cylindrical body.

According to the invention the seat arranged to receive the plug has, along its longitudinal axis, at least one anti-rotation annular portion with a non-circular cross-section relative to the longitudinal axis, i.e. perpendicular to the longitudinal axis, said non-circular cross-section preventing the plug from rotating upon applying a rotational force to said plug when said plug is received in the seat.

The plug, too, has at least one anti-rotation portion having a cross-section adapted to cooperate with the anti-rotation portion with non-circular cross-section of the seat, whereby the plug when received in the seat does not rotate if a rotational force is exerted onto said plug. Said seat is therefore substantially an anti-rotation seat. The non-circular, anti-rotation portion of the seat preferably comprises a polygonal shape, more preferably a hexagonal shape, but it can comprise a variety of non-circular shapes, such as, for example, an oval shape, or any other shape that does not allow rotation of the plug received in the seat. The non-circular anti-rotation portion of the plug has a hexagonal cross-section relative to the longitudinal axis. The anti-rotation portion of the plug, which is adapted to cooperate with the anti-rotation portion of the seat in the body of the device, is provided on the head of the plug.

Preferably, the diameter of the circumference inscribed in the anti-rotation seat is greater than the diameter of the axial through bore provided in the cylindrical body of the fastening device when the fastening device is made as a nut, or greater than the diameter of the axial blind bore when the fastening device is made as a bolt, said bore having a circular cross-section.

### Brief Description of the Drawings

Some preferred embodiments of the invention will be described by way of nonlimiting example with reference to the annexed drawings, in which:
- Fig. 1 is a perspective view of a fastening device according to a first embodiment which is not part of the invention, made as a nut;
- Fig. 2 is a perspective view of the fastening nut in Fig. 1, without plug;
- Fig. 3 shows a longitudinal section of the fastening nut in Fig. 1;
- Fig. 4 is a cross-sectional view of the fastening nut in Fig. 1;
- Fig. 5 is a perspective view of a fastening device according to a second embodiment which is not part of the invention, made as a nut;
- Fig. 6 shows a longitudinal section of the nut in Fig. 5;
- Fig. 7 shows a cross-section of the nut in Fig. 5;
- Fig. 8 shows a longitudinal section of a fastening device according to a third embodiment of the invention, made as a nut;
- Fig. 9 is a view from above of the fastening nut in Fig. 8;
- Fig. 10 is a perspective view of the fastening device according to a fourth embodiment of the invention, made as a bolt;
- Fig. 11 shows a longitudinal section of the bolt in Fig. 10.

### Detailed Description of Some Preferred Embodiments of the Invention

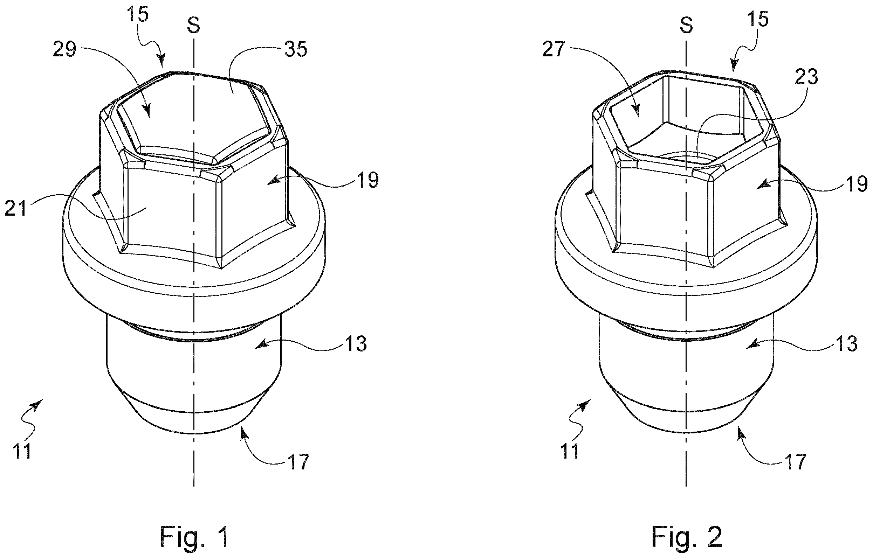

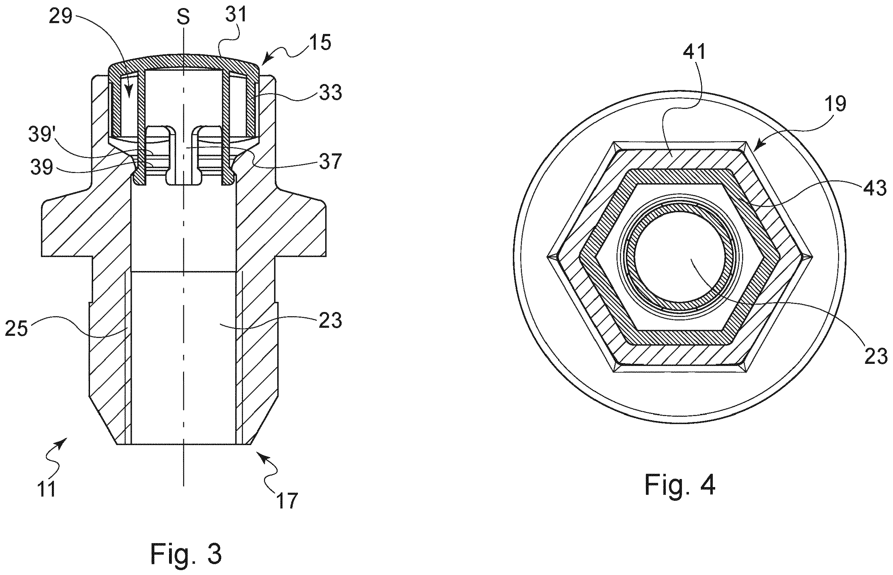

Referring to Figs. 1 to 4, there is illustrated a first embodiment of a fastening device 11 made as a nut according which is not part of the invention. For clarity and simplicity of description, hereinafter the fastening device 11 made as a nut will be referred to as fastening nut. The fastening nut 11 comprises a cylindrical body 13 in which there are provided a first end 15, a second end 17 and a longitudinal axis "S". An intermediate portion 19 is provided between the first end 15 and the second end 17, said intermediate portion having an outer engaging surface 21 intended for a driving tool or wrench, for example a hexagonal wrench, for rotating the fastening nut 11 about the longitudinal axis "S". In the illustrated embodiment, the intermediate portion 19 and therefore the engaging surface 21 have a hexagonal shape. In other embodiments, the intermediate portion 19 and the engaging portion 21 may have other shapes such as, for example, a square shape, a longitudinally grooved shape, or another shape. In addition, the cylindrical body 13 of the fastening nut 11 is provided with an axial, circular through bore 23. In the illustrated embodiment, the axial bore 23 is partially threaded, including a threaded portion 25 proximal to the second end 17. Furthermore, inside the cylindrical body 13 of the fastening nut 11 there is provided a seat 27 at the first end 15. The seat 27 develops axially about the longitudinal axis "S" and is adapted to receive a plug.

In addition, the fastening nut 11 is provided with a plug 29 shaped to engage in the seat 27 provided inside the cylindrical body 13 of the nut 11. The plug 29 comprises a head 31 and a body 33 extending centrally in an axial direction from the head 31. In the illustrated embodiment, and according to the invention, the body 33 of the plug 29 is integral to the head 31 of said plug 29, and more particularly, they are made as a single piece. The head 31 of the plug 29 comprises a surface 35, facing outwards when the plug 29 is received in the seat 27, on which surface any kind of information message, such as a logo or a wording, etc., can be provided, for example by printing. In addition, the head 31 of the plug may take a variety of colors and designs that allow to obtain the desired outer appearance.

The plug 29 and the cylindrical body 13 of the fastening nut 11 comprise engaging means 37, 39 cooperating with each other and arranged to hold the plug 29 firmly associated with the cylindrical body 13. In the illustrated embodiment, the engaging means 37, 39 comprise a plurality of axial legs, substantially "L"-shaped, facing outwards of the plug and, therefore, towards the inner wall of the nut 11 defined by the axial bore 23, when the plug is received in said seat. The axial legs 37 extend centrally from the head 31 of the plug 29. The legs 37 are adapted to cooperate with an annular edge 39 projecting radially inside the axial through bore 23 and adjacent to the seat 27 provided in the body 13 of the fastening nut 11. In the illustrated embodiment, the annular edge 39 projecting radially inside the axial through bore 23 has a guide surface 39' for promoting engagement of the legs 37 with the annular edge 39 of the cylindrical body 13. In the illustrated embodiment, the guide surface 39' of the annular edge is chamfered towards the seat 27 by an inclination angle preferably comprised between 30° and 40° relative to the longitudinal axis.

According to the invention, the seat 27 arranged to receive the plug 29 has at least one anti-rotation portion 41 with a non-circular cross-section relative to the longitudinal axis "S", i.e. perpendicular to the longitudinal axis "S", and the plug 29 correspondingly has at least one anti-rotation portion 43 with non-circular cross-section, adapted to cooperate with the anti-rotation portion 41 with non-circular cross-section, of the seat 27, so that the plug 29 does not rotate relative to the cylindrical body 13 upon applying a rotational force to said plug 29 when said plug is received in the seat 27. In the illustrated embodiment, the at least one anti-rotation portion 41 with non-circular cross-section, of the seat 27 has a hexagonal shape and the plug 29, too, has an anti-rotation portion 43 with hexagonal cross-section. In the illustrated not claimed embodiment, the at least one anti-rotation portion 43 of the plug 29 is provided both on the body 33 and on the head 31 of the plug 29, both taking the same hexagonal shape as the seat 27.

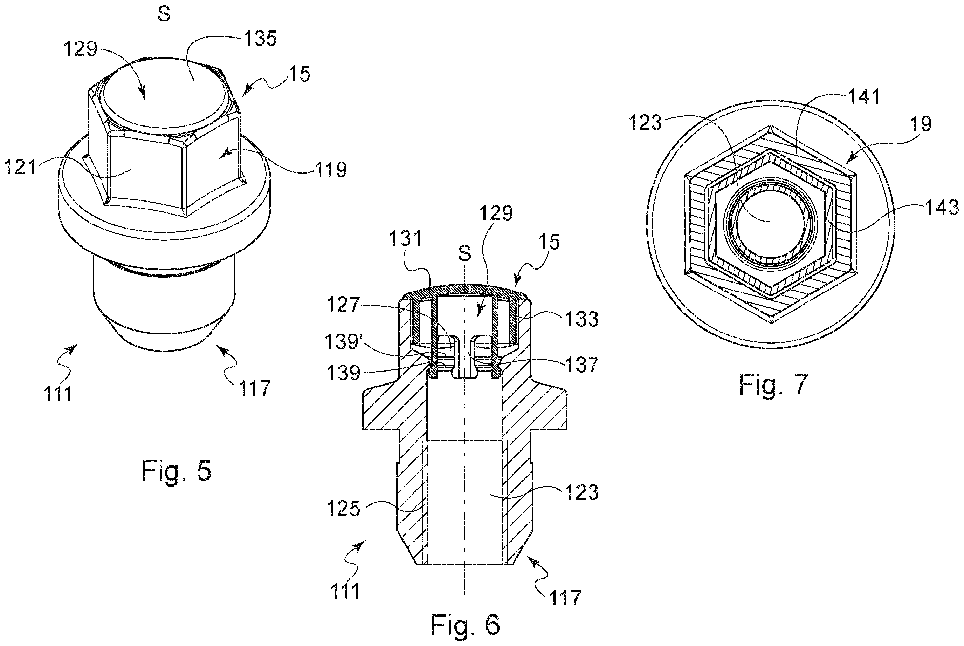

Figs. 5 to 7 show a second embodiment, which is not part of the invention, in which the at least one anti-rotation portion 143 of the plug 129 is provided only on the body 133 of the plug 129, which therefore has a hexagonal shape, whereas the head 131 has a circular shape.

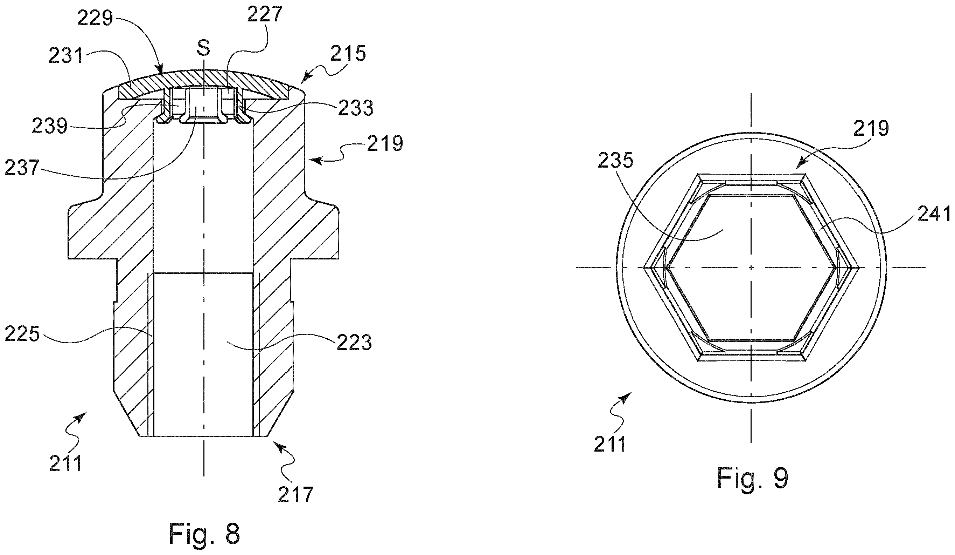

Figs. 8 to 9 show a third preferred embodiment according to the invention, in which the at least one anti-rotation portion 243 of the plug is provided only on the head 231, which therefore has a hexagonal shape, whereas the body 233 has a circular shape.

In the embodiments shown in Figs. 1 to 9, the seat 27, 127, 227 adapted to receive the plug 29, 129, 229 has a hexagonal shape and the diameter of the circumference inscribed in the seat 27, 127, 227 is greater than the diameter of the axial through bore 23, 123, 223 provided in the cylindrical body 13. In other embodiments, the anti-rotation portion 41, 141, 241 of the seat 27, 127, 227 can take other shapes, such as, for example, a polygonal shape, an oval shape, or any other non-circular shape, so that, in cooperation with the anti-rotation portion 43, 143, 243 of the plug 29, 129, 229, it does not allow rotation of the plug 29, 129, 229 received in the seat 27, 127, 227.

Referring to the first embodiment illustrated in Figs. 1 to 4 which is not part of the invention, the anti-rotation portion 43 of the plug 29 adapted to cooperate with an anti-rotation portion 41 with non-circular cross-section, of the seat 27 is provided both on the head 31 and on the body 33 of the plug 29. Alternatively, referring to the second embodiment illustrated in Figs. 5 to 7 which is not part of the invention, the anti-rotation portion 143 of the plug 129 is provided only on the body 133 of the plug 129. Referring to the third embodiment illustrated in Figs. 8 and 9 according to the invention, the anti-rotation portion 243 of the plug 229 is provided only on the head 231.

Accordingly, in the first embodiment illustrated in Figs. 1 to 4 which is not part of the invention, the plug 29 is provided with a head 31 comprising an anti-rotation portion 41 with hexagonal cross-section and a body 33 provided with an anti-rotation portion 43 with hexagonal cross-section. In the second embodiment illustrated in Figs. 5 to 7 which is not part of the invention, the plug 129 has a head 131 with circular shape, whereas the body comprises an anti-rotation portion 143 with hexagonal cross-section. In the third embodiment illustrated in Figs. 8 and 9 according to the invention, the plug 229 has an anti-rotation portion 241 with hexagonal cross-section on the head 231, whereas the body 233 has a circular shape so as to be received inside the axial bore 223.

Still referring to Figs. 1 to 9, although the illustrated embodiments refer to a fastening device provided with a through bore and thus defining a fastening nut, it is possible to provide that said device has a threaded shaft extending axially at the second end 17, 117, 217 and therefore defines a corresponding fastening bolt.

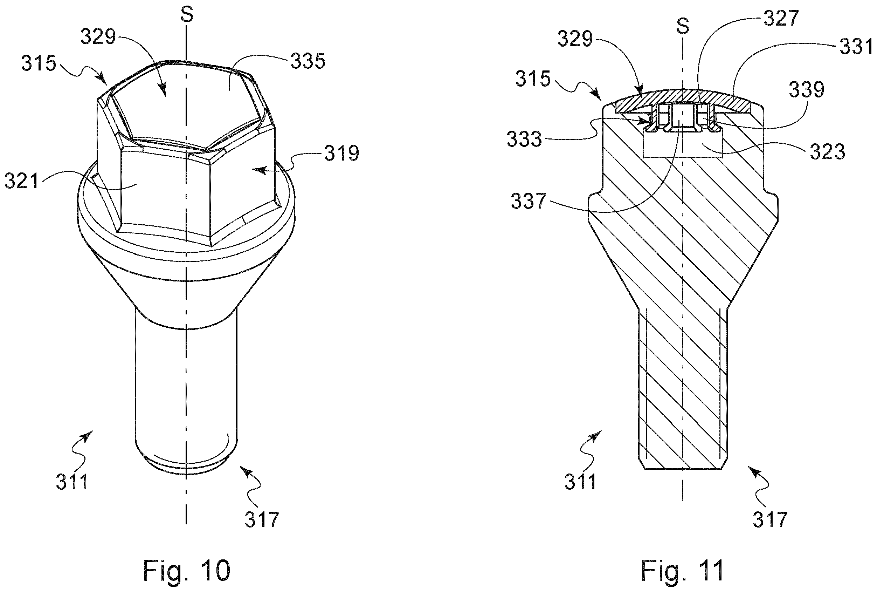

Referring now to Figs. 10 and 11, there is illustrated a fourth embodiment of the invention, in which the fastening device 311 is made as a bolt having a threaded shaft 51. For clarity and simplicity of description, the fastening device 311 made as a bolt will be referred to as fastening bolt 311. The fastening bolt 311 comprises a cylindrical body 313 in which there are provided a first end 315, a second end 317 and a longitudinal axis "S". An intermediate portion 319 is provided between the first end 315 and the second end 317, said intermediate portion having an outer engaging portion 321 for a driving tool or wrench for rotating the fastening bolt 311 about the longitudinal axis "S". In the illustrated embodiment, the intermediate portion 319 and therefore the engaging surface 321 have a hexagonal shape. In other embodiments, the intermediate portion 319 and the engaging portion 321 may have other shapes, such as, for example, a square shape, a longitudinally grooved shape, etc. The cylindrical body 313 of the fastening bolt 311 is further provided with an open blind bore at the first end 315. In addition, inside the cylindrical body 313 of the fastening bolt 311 there is provided a seat 327 at the first end 315. The seat 327 develops axially about the longitudinal axis "S" and is adapted to receive a plug 329. In addition, the fastening bolt 311 is provided with a plug 329 shaped so as to engage in the seat 327 provided in the cylindrical body 313 of the bolt 311. The plug 329 comprises a head 331 and a body 33 extending centrally in an axial direction from the head 331. In the illustrated embodiment, and according to the invention, the body 333 of the plug is integral to the head 331 of said plug. More particularly, the body 333 and the head 331 of said plug 329 are made as a single piece. The head 331 of the plug 329 comprises a surface 335, facing outwards when the plug 329 is received in the seat 327, on which surface any kind of information message such as, for example, a logo, a wording, etc. can be printed. In addition, the head 331 of the plug 329 may take a variety of colors and designs that allow to obtain the desired outer appearance.

The plug 329 and the cylindrical body 313 of the fastening bolt 311 comprise engaging means 337, 339 cooperating with each other, arranged for holding said plug 329 firmly associated with the cylindrical body 313. In the illustrated embodiment, the engaging means 337, 339 comprise a plurality of axial legs, substantially "L"-shaped, facing outwards of the plug and towards the inner wall of the bolt 311 defined by the axial blind bore 323 when the plug 329 is received in the seat 327. Said legs 337 extend centrally from the head 331 of the plug 329. The legs 337 are adapted to cooperate with an annular edge 339 projecting radially inside the axial blind bore 323 and adjacent to the seat 327 provided in the body 313 of the fastening bolt 311. In the illustrated embodiment, the annular edge projecting radially inside the axial blind bore 323 has a chamfered guide surface 339' which promotes press-fitting of the legs 337 into the bore 323 provided in the cylindrical body 313. In the illustrated embodiment, the guide surface 339' of the annular edge has a chamfered surface facing towards the seat 327 and defining an inclination angle preferably comprised between 30° and 40° relative to the longitudinal axis.

Advantageously, and according to the invention, the seat 327 adapted to receive the plug 329 has at least one anti-rotation portion 341 having a non-circular cross-section relative to the longitudinal axis "S", i.e. perpendicular to the longitudinal axis "S", and accordingly the plug 329 has at least one anti-rotation portion 343 having a non-circular cross-section adapted to cooperate with the anti-rotation portion 341 with non-circular cross-section of the seat 327, whereby the plug 329 when received in the seat 327 does not rotate upon application of a rotational force. In the illustrated embodiment according to the invention, the at least one anti-rotation portion 341 with non-circular cross-section of the seat 327 has a hexagonal shape and the plug 329, too, has an anti-rotation portion 343 with hexagonal cross-section provided on the head 331 of the plug, whereas the body 333 of the plug 329 has a circular shape.

The fastening device made as a nut or bolt as described and illustrated is susceptible to several variations and modifications falling within the wording of the appended claims.

## Claims

1. Fastening device made as a nut (11, 111, 211) or bolt (311), comprising:
- a cylindrical body (13, 113, 213, 313) in which there are provided a first end (15, 115, 215, 315) and a second end (17, 117, 217, 317), a longitudinal axis ("S"), an intermediate portion (19, 119, 219, 319) extending between said first and second ends (15, 115, 215, 315; 17, 117, 217, 317), an outer engaging surface (21, 121, 221, 321) provided on said intermediate portion (19, 119, 219) and intended for a driving tool or wrench, said cylindrical body (13, 113, 213) having an at least partially threaded axial through or blind bore (23, 123, 223) when said fastening device is made as a nut (11, 111, 211), or an axial blind bore (323) when said fastening device is made as a bolt (311), and a seat (27, 127, 227) provided inside said cylindrical body (13, 113, 213) at said first end (15, 115, 215, 315), said seat (27, 127, 227, 327) extending about said longitudinal axis ("S"); a plug (29, 129, 229, 329) shaped so as to engage in said seat (27, 127, 227, 327) provided in said cylindrical body (13, 113, 213, 327), wherein said plug (29, 129, 229, 329) comprises a head (31, 131, 231, 331) and a body (33, 133, 233, 333) extending centrally in an axial direction from said head (31, 131, 231, 331), said plug (29, 129, 229, 329) and said cylindrical body (13, 113, 213, 313) of the fastening device (11, 111, 211, 311) further comprising engaging means (37, 39; 137, 139; 237,239; 337, 339) cooperating with each other for holding said plug (29, 129, 229, 329) firmly associated with the cylindrical body (13, 113, 213, 313) of the fastening device (11, 111, 211, 311), wherein said engaging means (37; 137; 237; 337) comprise a plurality of legs extending centrally in an axial direction from the head (31, 131, 231, 331) of the plug (29, 129, 229, 329), said legs being adapted to cooperate with an annular edge (39,139,239,339) projecting radially inside the axial bore (23, 123, 223, 333) and adjacent to the seat (27, 127, 227, 327) provided in the cylindrical body (13, 113, 213) of the fastening device (11, 111, 211, 311), wherein said seat (27, 127, 227, 327) arranged to receive the plug (29, 129, 229, 329) has an anti-rotation portion (41, 141, 241, 341) with a non-circular cross-section relative to the longitudinal axis ("S")wherein said body (33, 133, 233, 333) of the plug (29, 129, 229, 329) is integral to said head (31, 131, 231, 331) of said plug and wherein said plug (29, 129, 229, 329) has at least one anti-rotation portion (43, 143, 243, 343) with a cross-section adapted to cooperate with said anti-rotation portion (41, 141, 241, 341) with non-circular cross-section, of the seat (27, 127, 227, 327), whereby rotation of the plug (29, 129, 229, 329) relative to the body (13, 113, 213, 313) of the fastening device (11,111,211,311) upon applying a rotational force to said plug (29, 129, 229, 329) is prevented when the plug (29, 129, 229, 329) is received within said seat (27, 127, 227, 327), wherein said anti-rotation portion (243, 343) is provided on the head (231) of the plug (229) and wherein said anti-rotation portion (243, 343) of the plug (229) has a hexagonal cross-section relative to the longitudinal axis ("S") and the body (233) of the plug (229) has a circular shape.

2. Fastening device according to claim 1, wherein said anti-rotation portion (41, 141, 241, 341) with non-circular cross-section of the seat (27, 127, 227, 327) has a hexagonal shape.

3. Fastening device according to claim 2, wherein said body (33, 133, 233, 333) and said head (31, 131, 231, 331) of the plug (29, 129, 229, 239) are made as a single piece.

4. Fastening device according to any of the preceding claims, wherein the diameter of the circumference inscribed in the anti-rotation portion of the seat (27,127,227,327) is greater than the diameter of the axial through bore (23,123,223) provided in the cylindrical body (13,113,213) of said fastening device when the fastening device is made as a nut (11,111,211), or greater than the diameter of the axial blind bore (323) when the fastening device is made as a bolt (311), said bore (23,123,223,323) having a circular cross-section.

5. Fastening device according to any of the preceding claims, wherein the head (231,331) of the plug (229,329) comprises a surface (235,335), facing outwards when the plug (229,329) is received in the seat (227, 327), on which surface any kind of information message, such as a logo or a wording, etc., is provided.

6. Fastening device according to any of the preceding claims, wherein said engaging means (37, 39; 137,139; 237,239; 337,339) comprise a plurality of axial legs, substantially "L"-shaped, facing outwards of the plug and, therefore, towards the inner wall of the fastening device (11,111,211,311) defined by the axial bore (23,123,223,333), when the plug is received in said seat.

7. Fastening device according to any of the preceding claims, wherein the annular edge (39,139,239,339) projecting radially inside the axial through bore (23,123,223,323) has a guide surface (3 9', 13 9',23 9',3 3 9') for promoting engagement of the legs (37,137,237,337) with the annular edge (39,139,239,339) of the cylindrical body (13,113,213,313).

8. Fastening device according to claim 7, wherein the guide surface (3 9', 13 9',23 9',3 3 9') of the annular edge (39,139,239,339) is chamfered towards the seat (27,127,227,327) by an inclination angle preferably comprised between 30° and 40° relative to the longitudinal axis.

## Patentansprüche

1. Befestigungsvorrichtung, als Mutter (11, 111, 211) oder Bolzen (311) ausgebildet, mit:
- einem zylindrischen Körper (13, 113, 213, 313), in dem ein erstes Ende (15, 115, 215, 315), ein zweites Ende (17, 117, 217, 317), eine Längsachse ("S"), ein zwischen dem ersten und dem zweiten Ende (15, 115, 215, 315; 17, 117, 217, 317) verlaufende Zwischenabschnitt (19, 119, 219, 319), und eine auf dem Zwischenabschnitt (19, 119, 219) vorgesehene und für ein Antriebswerkzeug oder einen Spannschlüssel bestimmte äußere Eingriffsfläche (21, 121, 221, 321) vorgesehen sind, wobei der zylindrische Körper (13,113, 213) bei einer als Mutter (11, 111, 211) ausgebildeten Befestigungsvorrichtung (13, 113, 213) eine mit mindestens einem Teilgewinde versehene axiale Durchgangs- oder Sacklochbohrung (23, 123, 223) oder bei einer als Bolzen (311) ausgebildeten Befestigungsvorrichtung eine axiale Sackbohrung (323) aufweist und einen im zylindrischen Körper (13, 113, 213) am ersten Ende (15, 115, 215, 315) ausgebildeten Sitz (27, 127, 227) hat, wobei der Sitz (27, 127, 227, 327) sich um die Längsachse ("S") erstreckt;
- einem Stopfen (29, 129, 229, 329), der so geformt ist, dass er in den im zylindrischen Körper (13, 113, 213, 327) angeordneten Sitz (27, 127, 227, 327) eingreift, wobei der Stopfen (29, 129, 229, 329) einen Kopf (31, 131, 231, 331) und einen sich mittig in axialer Richtung vom Kopf (31, 131, 231, 331) erstreckenden Körper (33, 133, 233, 333) umfasst, wobei der Stopfen (29, 129, 229, 329) und der zylindrische Körper (13, 113, 213, 313) der Befestigungsvorrichtung (11, 111, 211, 311) weiter Eingriffsmittel (37, 39; 137, 139; 237, 239; 337, 339) umfassen, die miteinander zusammenwirken, um den Stopfen (29, 129, 229, 329) fest mit dem zylindrischen Körper (13, 113, 213, 313) der Befestigungsvorrichtung (11, 111, 211, 311) verbunden zu halten, wobei die Eingriffsmittel (37; 137; 237; 337) mehrere sich mittig in axialer Richtung vom Kopf (31, 131, 231, 331) des Stopfens (29, 129, 229, 329) erstreckende Beine umfassen, wobei die Beine zum Zusammenwirken mit einer ringförmigen Kante (39,139,239,339) geeignet sind, die radial in die axiale Bohrung (23, 123, 223, 333) hineinragt und neben dem im zylindrischen Körper (13, 113, 213) der Befestigungsvorrichtung (11, 111, 211, 311) angeordneten Sitz (27, 127, 227, 327) vorgesehen ist, wobei der zum Aufnehmen des Stopfens (29, 129, 229, 329) angeordnete Sitz (27, 127, 227, 327) einen Verdrehsicherungsabschnitt (41, 141, 241, 341) mit einem nicht kreisförmigen Querschnitt relativ zur Längsachse ("S") aufweist, wobei der Körper (33, 133, 233, 333) des Stopfens (29, 129, 229, 329) integral mit dem Kopf (31, 131, 231, 331) des Stopfens ausgebildet ist, und wobei der Stopfen (29, 129, 229, 329) mindestens einen Verdrehsicherungsabschnitt (43, 143, 243, 343) mit einem Querschnitt aufweist, der zum Zusammenwirken mit nicht kreisförmigem Querschnitt versehenen Verdrehsicherungsabschnitt (41, 141, 241, 341) des Sitzes (27, 127, 227, 327) geeignet ist, wodurch beim Aufbringen einer Rotationskraft auf den Stopfen (29, 129, 229, 329) eine Rotation des Stopfens (29, 129, 229, 329) relativ zum Körper (13, 113, 213, 313) der Befestigungsvorrichtung (11,111,211,311) verhindert wird, wenn der Stopfen (29, 129, 229, 329) im Sitz (27, 127, 227, 327) aufgenommen ist, wobei der Verdrehsicherungsabschnitt (243, 343) am Kopf (231) des Stopfens (229) vorgesehen ist, und wobei der Verdrehsicherungsabschnitt (243, 343) des Stopfens (229) einen hexagonalen Querschnitt relativ zur Längsachse ("S") aufweist und der Körper (233) des Stopfens (229) eine kreisförmige Form hat.

2. Befestigungsvorrichtung nach Anspruch 1, wobei der Verdrehsicherungsabschnitt (41, 141, 241, 341) mit nicht kreisförmigem Querschnitt des Sitzes (27, 127, 227, 327) eine hexagonale Form hat.

3. Befestigungsvorrichtung nach Anspruch 2, wobei der Körper (33, 133, 233, 333) und der Kopf (31, 131, 231, 331) des Stopfens (29, 129, 229, 239) einstückig gefertigt sind.

4. Befestigungsvorrichtung nach einem der vorhergehenden Ansprüche, wobei der Durchmesser des in dem Verdrehsicherungsabschnitt des Sitzes (27,127,227,327) eingeschriebenen Umfangs größer ist als der Durchmesser der im zylindrischen Körper (13,113,213) der Befestigungsvorrichtung vorgesehenen axialen Durchgangsbohrung (23,123,223), wenn die Befestigungsvorrichtung als Mutter (11,111,211) ausgebildet ist, oder größer ist als der Durchmesser der axialen Sackbohrung (323), wenn die Befestigungsvorrichtung als Bolzen (311) ausgebildet ist, wobei die Bohrung (23,123,223,323) einen kreisförmigen Querschnitt aufweist.

5. Befestigungsvorrichtung nach einem der vorhergehenden Ansprüche, wobei der Kopf (231,331) des Stopfens (229,329) eine Oberfläche (235, 335) umfasst, die nach außen gerichtet ist, wenn der Stopfen (229,329) im Sitz (227, 327) aufgenommen ist, und auf der jede Art von Informationsbotschaft, wie z. B. ein Logo oder ein Schriftzug usw., angebracht ist.

6. Befestigungsvorrichtung nach einem der vorhergehenden Ansprüche, wobei die Eingriffsmittel (37, 39; 137,139; 237,239; 337,339) mehrere im Wesentlichen "L"-förmige axiale Beine, die zur Außenseite des Stopfens hin, und deshalb zur durch die axiale Bohrung (23,123,223,333) gebildeten Innenwand der Befestigungsvorrichtung (11,111,211,311) hin, gerichtet sind, wenn der Stopfen im Sitz aufgenommen ist.

7. Befestigungsvorrichtung nach einem der vorhergehenden Ansprüche, wobei die radial in die axiale Bohrung (23, 123, 223, 333) hineinragende ringförmige Kante (39,139,239,339) eine Führungsfläche (39',139',239',339') hat, um den Eingriff der Beine (37,137,237,337) mit der ringförmigen Kante (39,139,239,339) des zylindrischen Körpers (13,113,213,313) zu fördern.

8. Befestigungsvorrichtung nach Anspruch 7, wobei die Führungsfläche (39',139',239',339') der ringförmigen Kante (39,139,239,339) zum Sitz (27,127,227,327) hin in einem Neigungswinkel vorzugsweise zwischen 30° and 40° relativ zur Längsachse abgeschrägt ist.

## Revendications

1. Dispositif de fixation réalisé sous forme d'écrou (11, 111, 211) ou de boulon (311), comprenant :
- un corps cylindrique (13, 113, 213, 313) dans lequel sont prévus une première extrémité (15, 115, 215, 315) et une deuxième extrémité (17, 117, 217, 317), un axe longitudinal ("S"), une partie intermédiaire (19, 119, 219, 319) s'étendant entre cette première et cette deuxième extrémités (15, 115, 215, 315 ; 17, 117, 217, 317), une surface d'engagement externe (21, 121, 221 , 321) prévue sur cette partie intermédiaire (19, 119, 219) et destinée à un outil ou clé d'entraînement, ce corps cylindrique (13, 113, 213) comportant un trou axial traversant ou borgne au moins partiellement fileté (23, 123, 223) lorsque ce dispositif de fixation est réalisé sous forme d'écrou (11, 111, 211), ou bien un trou axial borgne (323) lorsque ce dispositif de fixation est réalisé sous forme de boulon (311), et un siège (27, 127, 227) prévu à l'intérieur de ce corps cylindrique (13, 113, 213) au niveau de cette première extrémité (15, 115, 215, 315), ce siège (27, 127, 227, 327) s'étendant autour de cet axe longitudinal ("S") ;
- un bouchon (29, 129, 229, 329) conformé de manière à s'engager dans ce siège (27, 127, 227, 327) prévu dans ce corps cylindrique (13, 113, 213, 327), ce bouchon (29, 129, 229, 329) comprenant une tête (31, 131, 231, 331) et un corps (33, 133, 233, 333) s'étendant centralement dans une direction axiale à partir de cette tête (31, 131, 231, 331),
dans lequel ce bouchon (29, 129, 229, 329) et ce corps cylindrique (13, 113, 213, 313) du dispositif de fixation (11, 111, 211, 311) comportent en outre des moyens d'engagement (37, 39; 137, 139; 237, 239; 337, 339) coopérant entre eux pour maintenir ce bouchon (29, 129, 229, 329) fermement associé à ce corps cylindrique (13, 113, 213, 313) de ce dispositif de fixation (11, 111, 211, 311),
dans lequel ces moyens d'engagement (37; 137; 237, 239; 337) comprennent une pluralité de pattes s'étendant centralement dans une direction axiale à partir de la tête (31, 131, 231, 331) du bouchon (29, 129, 229, 329), ces pattes étant adaptées pour coopérer avec un bord annulaire faisant saillie radialement à l'intérieur du trou axial (23, 123, 223, 333) et agencé adjacent au siège (27, 127, 227, 327) prévu dans le corps cylindrique (13, 113, 213) du dispositif de fixation (11, 111, 211, 311),
dans lequel ce siège (27, 127, 227, 327) agencé pour recevoir le bouchon (29, 129, 229, 329) présente une portion anti-rotation (41, 141, 241, 341) ayant un section transversale non circulaire par rapport à l'axe longitudinal ("S"),
dans lequel ce corps (33, 133, 233, 333) de ce bouchon (29, 129, 229, 329) est solidaire de cette tête (31, 131, 231, 331) de ce bouchon et dans lequel ce bouchon (29, 129, 229, 329) présente au moins une portion anti-rotation (43, 143, 243, 343) ayant une section adaptée à coopérer avec cette portion anti-rotation (41, 141, 241, 341) à section transversale non circulaire du siège (27, 127, 227, 327), de telle sorte que la rotation du bouchon (29, 129, 229, 329) par rapport au corps (13, 113, 213, 313) du dispositif de fixation (11, 111, 211, 311) lors de l'application d'une force de rotation à ce bouchon (29, 129, 229, 329) est empêchée lorsque ce bouchon (29, 129, 229, 329) est reçu à l'intérieur de ce siège (27, 127, 227, 327),
dans lequel cette partie anti-rotation (243, 343) est prévue sur la tête (231) du bouchon (229) et dans lequel cette partie anti-rotation (243, 343) du bouchon (229) présente une section hexagonale par rapport à l'axe longitudinal ("S") et le corps (233) du bouchon (229) a une forme circulaire.

2. Dispositif de fixation selon la revendication 1, dans lequel cette portion anti-rotation (41, 141, 241, 341) à section non circulaire du siège (27, 127, 227, 327) a une forme hexagonale.

3. Dispositif de fixation selon la revendication 2, dans lequel ce corps (33, 133, 233, 333) et cette tête (31, 131, 231, 331) de ce bouchon (29, 129, 229, 239) sont réalisés d'une seule pièce.

4. Dispositif de fixation selon l'une quelconque des revendications précédentes, dans lequel le diamètre de la circonférence inscrite dans la portion anti-rotation du siège (27, 127, 227, 327) est plus grand que le diamètre du trou axial traversant (23, 123, 223) prévu dans le corps cylindrique (13, 113, 213) du dispositif de fixation lorsque ce dispositif de fixation est réalisé sous forme d'écrou (11, 111, 211), ou bien plus grand que le diamètre du trou axial borgne (323) lorsque le dispositif de fixation est réalisé sous forme de boulon (311), ce trou (23, 123, 223, 323) ayant une section transversale circulaire.

5. Dispositif de fixation selon l'une quelconque des revendications précédentes, dans lequel la tête (231, 331) du bouchon (229, 329) comprend une surface (235, 335), tournée vers l'extérieur lorsque le bouchon (229, 329) est reçu dans le siège (227, 327), sur laquelle est fourni toute sorte de message informatif, tel qu'un logo ou un texte, ou autres.

6. Dispositif de fixation selon l'une quelconque des revendications précédentes, dans lequel ces moyens d'engagement (37, 39; 137, 139; 237, 239; 337, 339) comprennent une pluralité de pattes axiales, sensiblement en forme de "L, tournées vers l'extérieur du bouchon et, donc, vers la paroi interne du dispositif de fixation (11, 111, 211, 311) défini par le trou axial (23, 123, 223, 333), lorsque ce bouchon est reçu dans ce siège.

7. Dispositif de fixation selon l'une quelconque des revendications précédentes, dans lequel le bord annulaire (39, 139, 239, 339) faisant saillie radialement à l'intérieur du trou axial traversant (23, 123, 223, 323) présente une surface de guidage (39', 139', 239', 339') pour favoriser l'engagement des pattes (37, 137, 237, 337) avec ce bord annulaire (39, 139, 239, 339) du corps cylindrique (13, 113, 213, 313).

8. Dispositif de fixation selon la revendication 7, dans lequel la surface de guidage (39', 139', 239', 339') du bord annulaire (39, 139, 239, 339) est chanfreiné vers le siège (27, 127, 227, 327) avec un angle d'inclinaison compris de préférence entre 30° et 40° par rapport à l'axe longitudinal.
